(19) **Europäisches Patentamt**
**European Patent Office**
**Office européen des brevets**

(11) **EP 3 047 586 B1**

(12) **EUROPEAN PATENT SPECIFICATION**

(45) Date of publication and mention
of the grant of the patent:
**25.04.2018 Bulletin 2018/17**

(51) Int Cl.:
***H04L 1/00*** *(2006.01)*

(21) Application number: **13893803.0**

(22) Date of filing: **20.09.2013**

(86) International application number:
**PCT/SE2013/051103**

(87) International publication number:
**WO 2015/041579 (26.03.2015 Gazette 2015/12)**

(54) **NETWORK NODE, USER EQUIPMENT AND METHODS FOR OBTAINING A MODULATION AND CODING SCHEME**

NETZWERKKNOTEN, BENUTZERVORRICHTUNG UND VERFAHREN ZUR HERSTELLUNG EINES MODULATIONS- UND CODIERUNGSSCHEMAS

NOEUD DE RÉSEAU, ÉQUIPEMENT D'UTILISATEUR ET PROCÉDÉS POUR OBTENIR UN SCHÉMA DE MODULATION ET DE CODAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.07.2016 Bulletin 2016/30**

(73) Proprietor: **Telefonaktiebolaget LM Ericsson (publ)**
**164 83 Stockholm (SE)**

(72) Inventors:
• **FRÖBERG OLSSON, Jonas**
**S-590 74 Ljungsbro (SE)**
• **ERIKSSON, Erik**
**S-585 93 Linköping (SE)**
• **SIMONSSON, Arne**
**S-954 33 Gammelstad (SE)**

(74) Representative: **Zacco Sweden AB**
**P.O. Box 5581**
**114 85 Stockholm (SE)**

(56) References cited:
**WO-A1-2012/099273        WO-A1-2013/123961
WO-A1-2013/127303        CN-A- 102 684 816
GB-A- 2 500 254            GB-A- 2 500 254
US-A1- 2010 271 988**

• **PANASONIC: "Discussion on 256QAM for Downlink in Small Cell Deployments", 3GPP DRAFT; R1-132138, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050697915, Retrieved from the Internet: URL:http://www.3gpp.org/ftp/tsg_ran/WG1_RL 1/TSGR1_73/Docs/ [retrieved on 2013-05-11]**
• **"Evaluation on 256QAM in small cell scenario", 3GPP DRAFT; R1-132266 EVALUATION ON 256QAM IN SMALL CELL SCENARIO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG1, no. Fukuoka, Japan; 20130520 - 20130524 11 May 2013 (2013-05-11), XP050698036, Retrieved from the Internet: URL:http://www.3gpp.org/ftp/tsg_ran/WG1_RL 1/TSGR1_73/Docs/ [retrieved on 2013-05-11]**
• **'EVALUATION ON 256 QAM IN SMALL CELL SCENARIO' R1- 132266, IN 3GPP TSG-RAN WG1 #73 20 May 2013, XP050698036**

EP 3 047 586 B1

**Description**

TECHNICAL FIELD

Embodiments herein relate to a user equipment, a network node and methods therein. In particular, it relates to obtaining a Modulation and Coding Scheme, MCS, which MCS.

BACKGROUND

Communication devices such as User Equipments (UEs) are enabled to communicate wirelessly in a cellular communications network or wireless communication system, sometimes also referred to as a cellular radio system or cellular networks. The communication may be performed e.g. between two UEs, between a UE and a regular telephone and/or between a UE and a server via a Radio Access Network (RAN) and possibly one or more core networks, comprised within the cellular communications network.

UEs may further be referred to as wireless terminals, wireless device, mobile terminals and/or mobile stations, mobile telephones, cellular telephones, laptops, tablet computers or surf plates with wireless capability, just to mention some further examples. The UEs in the present context may be, for example, portable, pocket-storable, handheld, computer-comprised, or vehicle-mounted mobile devices, enabled to communicate voice and/or data, via the RAN, with another entity, such as another user equipment or a server. The UE may also be a machine to machine communication device that serves as a data communication modem or is built in to equipment communicating data with server without human interaction.

The cellular communications network covers a geographical area which is divided into cell areas, wherein each cell area being served by an access node. A cell is the geographical area where radio coverage is provided by the access node.

The access node may further control several transmission points, e.g. having Remote Radio Units (RRUs). A cell can thus comprise one or more access nodes each controlling one or more transmission/reception points. A transmission point, also referred to as a transmission/reception point, is an entity that transmits and/or receives radio signals. The entity has a position in space, e.g. an antenna. An access node is an entity that controls one or more transmission points. The access node may e.g. be a base station such as a Radio Base Station (RBS), enhanced Node B (eNB), eNodeB, NodeB, B node, or BTS (Base Transceiver Station), depending on the technology and terminology used. The base stations may be of different classes such as e.g. macro eNodeB, micro eNodeB, home eNodeB or pico base station, based on transmission power and thereby also cell size.

Further, each access node may support one or several communication technologies. The access nodes communicate over the air interface operating on radio frequencies with the UEs within range of the access node. In the context of this disclosure, the expression Downlink (DL) is used for the transmission path from the base station to the mobile station. The expression Uplink (UL) is used for the transmission path in the opposite direction i.e. from the UE to the base station.

In 3rd Generation Partnership Project (3GPP) Long Term Evolution (LTE), base stations, which may be referred to as eNodeBs or even eNBs, may be directly connected to one or more core networks.

3GPP LTE radio access standard has been written in order to support high bitrates and low latency both for uplink and downlink traffic. All data transmission is in LTE is controlled by the radio base station.

In LTE, Channel State Information (CSI) is collected by a base station and used to adopt the transmission for each UE in the cell. CSI is a report format including one or more suggestions by the UE for transmission rank, pre-coding and/or modulation and coding reflecting one or more CSI measurement instances. A CSI process may define such a CSI measurement instance specifying the channel and interference measurement resource. The transmission adaption is known as link adaptation wherein a transmission rank, pre-coder and Modulation and Coding Scheme (MCS) is selected.

In many mobile communication systems the selected MCS is signaled from a base station to a UE using a single indicator.

In 3GPP specified systems such as TS 36.213, Section 7.1.7.1 for DL and Section 8.6.1 for UL and this indicator is known as the MCS Index, or MCSI, and is sent on a Physical Downlink Control CHannel (PDCCH) or evolved PDCCH (ePDCCH). Herein, an "indicator" will be referred to as what is signaled and "index" will be referred to as a table entry.

In LTE (Long-Term Evolution) the MCS indicator comprises of 5-bits that give 32 different values ranging from 0 to 31. Using 5 bits, $2^5 = 32$ different binary values can represented: 0 = (0,0,0,0,0), 1=(0,0,0,0,1), 2=(0,0,0,1,0), ..., 31=(1,1,1,1,1). The values 29-31 are reserved for re-transmissions and hence the values 0-28 remain to indicate different modulations and code rates (coding scheme) for new transmissions. For downlink the MCS indicator maps to a MCS index providing to a Transport Block Size (TBS) index, ($I_{TBS}$) using Table 1, see 3GPP TS 36.213, Section 7.1.7.1 Physical layer procedures. Thus, in the terminology used herein, MCS_index = MCS_indicator.

*Table 1* Modulation and TBS index table PDSCH

| MCS Index $I_{MCS}$ | Modulation Order $Q_m$ | TBS Index $I_{TBS}$ |
|---|---|---|
| 0 | 2 | 0 |
| 1 | 2 | 1 |
| 2 | 2 | 2 |
| 3 | 2 | 3 |
| 4 | 2 | 4 |
| 5 | 2 | 5 |
| 6 | 2 | 6 |
| 7 | 2 | 7 |
| 8 | 2 | 8 |
| 9 | 2 | 9 |
| 10 | 4 | 9 |
| 11 | 4 | 10 |
| 12 | 4 | 11 |
| 13 | 4 | 12 |
| 14 | 4 | 13 |
| 15 | 4 | 14 |
| 16 | 4 | 15 |
| 17 | 6 | 15 |
| 18 | 6 | 16 |
| 19 | 6 | 17 |
| 20 | 6 | 18 |
| 21 | 6 | 19 |
| 22 | 6 | 20 |
| 23 | 6 | 21 |
| 24 | 6 | 22 |
| 25 | 6 | 23 |
| 26 | 6 | 24 |
| 27 | 6 | 25 |
| 28 | 6 | 26 |
| 29 | 2 | reserved |
| 30 | 4 | reserved |
| 31 | 6 | reserved |

Modulation order ($Q_m$) 2 means Quadrature Phase-Shift Keying (QPSK), modulation order 4 means 16 Quadrature Amplitude Modulation 16(QAM), and modulation order 6 means 64QAM modulation. Up to Release 11 of the 3GPP specification higher modulation than 64QAM is not supported. Now 3GPP started to discuss extending the support to 256QAM.

In QAM, an input stream is divided into groups of bits based on the number of modulation states used. For example, in QPSK, each two bits of input, provides four values alters of the phase and amplitude of the carrier to derive four unique modulation states. In 16QAM and 64QAM four and six bits generate 16 and 64 modulation states respectively.

A straight-forward extension to 256QAM support may increase the number of bits for the MCS indicator/index or reduce the TBS resolution for QPSK, 16QAM and 64QAM to make room for 256QAM TBS entries.

Also CQI reporting needs a corresponding extension to support 256 QAM. The existing reporting format only supports up to an efficiency of 5.5547 which will not give room to report a channel quality where 256 QAM is beneficial. Simply described, efficiency refers to the number of information bits per modulation symbol that is supported by the channel to achieve 10% error rate. CQI is precisely defined in 3GPP TS 36.213, Section 7.2.3 See Table 2 from 3GPP TS 36.213, Section 7.2.3....

*Table 2 CQI table*

| CQI index | modulation | code rate x 1024 | efficiency |
|---|---|---|---|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

The CQI indices define different modulation and coding schemes for a imagined PDSCH transmission on a so-called CSI reference resource, wherein the CSI reference resource specifies a group of physical resource blocks and their physical layer properties.

The CSI reference resource specifies when the transmission was imagined to occur, which resources were used, and so on. The CSI reference resource thus specifies how UE shall measure and how it shall derive a CQI value from list of CSI indices.

The CQI comprises information sent from a UE to a base station to indicate a suitable transmission adaptation, i.e., the CQI value is an MCS value. CQI is a 4-bit integer and is based on the observed Signal-to-Interference-plus-Noise Ratio (SINR) at the UE. The CQI estimation process takes into account the UE capability such as the number of antennas and the type of receiver used for detection. This is important since for the same SINR value the MCS level that can be supported by a UE depends on these various UE capabilities, which needs to be taken into account in order for the base station to select an optimum MCS level for a transmission. The CQI reported values are used by the base station for downlink scheduling and link adaptation.

Similar straight forward extensions as for MCS may be applied, to increase the number of bits for CQI reporting or to reduce the efficiency and coder rate resolution.

There are problems with the above solutions since they lead to new Downlink Control Information (DCI) and Channel Status Information (CSI) formats and increased signaling overhead and to worse performance since possible TBS is further away from the optimal one and further to worse channel estimation for link adaptation since the CSI refinement is reduced.

**3GPP R1-132138** discusses the requirements that have to be fulfilled in order to use 256QAM efficiently for PDSCH transmission, and the necessary adaptation and/or extensions of the control signaling in terms of MCS indication and CQI reporting. Two basic options can be considered come into mind for such an adaptation. The first one is a simple extension of the MCS field by one bit which results in an overall set of 64 code points for indication of modulation order and code rate. The second option addresses the use of the existing 32 code points in a sense that code points previously used for other modulation schemes will be used for indicating 256QAM based PDSCH transmissions. With respect to the second option, such an approach can be interpreted as shifting the SINR range that is covered by the MCS table.

WO2012099273A1discloses a Channel State Information (CSI) feedback method and a User Equipment (UE). The method comprises the following steps of: determining a set of coordinated Base Stations (BSs) participating multi-BS coordination, the set of coordination BSs containing a serving BS and at least one non-serving BS; for each BS in the set of coordinated BSs: calculating a Signal to Interference and Noise Ratio (SINR) for a channel between a UE and the BS based on a hypothetical BS coordination mode corresponding to the BS; and deriving a Channel Quality Index (CQI) corresponding to the calculated SINR and feeding back the derived CQI to the serving BS.

WO2013127303 A1provides an information transmission method and device supporting higher order modulation. The method includes: reporting, by a UE, a CQI value to an eNB; receiving, by the UE, an MCS value sent by the eNB, where the MCS value is determined by the eNB according to the CQI value; and receiving, by the UE, PDSCH data according to the MCS value, where the CQI value and the MCS value are determined according to a second set of tables, where a modulation scheme that can be supported by the second set of tables is higher than 64QAM.

SUMMARY

It is therefore an object of embodiments herein to enhance the performance in a wireless communications network.

The object is achieved by a method according to claim 1 or 5, or by an apparatus according to claim 11 or 15.

By using the one or more offset values when the user equipment can obtain the MCS from the modulation and coding index table enabling the modulation and coding index table to be extended with more entries where the addressed row may be determined by a combination of a MCS indicator in the legacy format, and one or more offset values. This provides modulation and coding index table signalling for higher order modulation such as e.g. 256QAM at low signalling cost resulting in an enhanced performance of the wireless communications network.

A further advantage with embodiments herein is that no new DCI or CSI formats are required to be defined in the standard, and can thus operate in full backward compatible manner.

An advantage with embodiments herein is also that the MCS resolution is increased at low signaling cost.

BRIEF DESCRIPTION OF THE DRAWINGS

Examples of embodiments herein are described in more detail with reference to attached drawings in which:

Figure 1    is a schematic block diagram illustrating embodiments of a wireless communications network.
Figure 2    is a flowchart depicting embodiments of a method in a user equipment.
Figure 3    is a flowchart depicting embodiments of a method in a network node
Figure 4    is a schematic block diagram illustrating embodiments of a user equipment.
Figure 5    is a schematic block diagram illustrating embodiments of a network node.

DETAILED DESCRIPTION

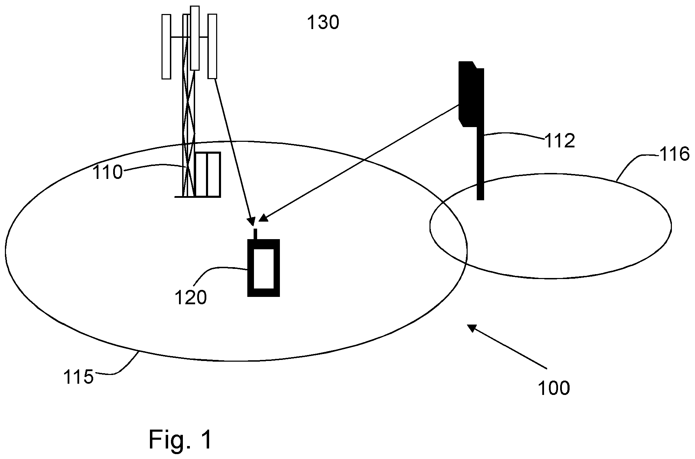

**Figure 1** depicts an example of a **wireless communications network 100** according to a first scenario in which embodiments herein may be implemented. The wireless communications network100 is a wireless communication network such as an LTE, WCDMA, GSM network, any 3GPP cellular network, Wimax, or any cellular network or system.

The wireless communications network 100 comprises plurality of network nodes whereof two, a **network node 110** and a **second network node 112** are depicted in Figure 1. The term second network node 112 used herein may in some embodiments relate to one or more second network nodes 112. The network node 110 and the second network node 112 are network nodes which each may be a transmission point such as a radio base station, for example an eNB, an eNodeB, or an Home Node B, an Home eNode B or any other network node capable to serve a user equipment or a machine type communication device in a wireless communications network. The network node 110 serves a **first cell 115** and the second network node 112 serves a **second cell 116.** In another exemplifying wireless network the second network node 112 serves the same first cell 115, wherein the second cell 116 is not present, or the second cell 116 may be part of the coverage area for first cell 115.

A **user equipment** 120 is configured to operate in the wireless communications network 100. The network node 110 and the second access node 112 may each be a transmission point for the user equipment 120. However, embodiments herein may be applied in any kind of network scenario where the user equipment 120 and the network node 110 collaborate as e.g. in LTE.

The user equipment 120 may e.g. be a wireless device, a mobile wireless terminal or a wireless terminal, a mobile phone, a computer such as e.g. a laptop, a Personal Digital Assistants (PDAs) or a tablet computer, sometimes referred to as a surf plate with wireless capability, or any other radio network units capable to communicate over a radio link in a wireless communications network. Please note the term user equipment used in this document also covers other wireless devices such as Machine to machine (M2M) devices.

According to some embodiments herein, one or more offset values are defined. MCS and CQI tables are extended with more entries where the addressed row may be determined by a combination of signaled indicator in the legacy format, such as e.g. TBS and CQI respectively, and one or more offset values. For example, if the MSC indicator is 24, and the offset value is defined to be 6, the modulation and coding index table shall be entered at MCS index 24 + 6 = 30. In another example, if the MSC indicator is 24, and the offset value is defined to be 0, the modulation and coding index table shall be entered at MCS index 24 + 0 = 24.

The one or more offset values may preferably be signaled to the user equipment 120 using Radio Resource Control (RRC) signaling. The offset value may be common or separate for MCS and CQI as well as same or individual for each rank. This provides MCS signalling for higher order modulation, such as e.g. 256QAM at low signalling cost. In general, an offset value defines a mapping from an MCS indicator to an MCS index value. One such mapping is exemplified by the function

$$MCS\_index = MCS\_indicator + MCS\_offset, \qquad [1]$$

where MCS_indicator is the MCS indicator and MCS_offset is the offset value.

Another example with two offset values MCS_offset#1 and MCS_offset#2 representing the MCS subset selector may be defined by the function

$$MCS\_index = A(MCS\_offset\#1) * MCS\_indicator + B(MCS\_offset\#2),$$

where A(MCS_offset#1) and B(MCS_offset#2) are values determined by the offset values.

Embodiments of a method will first be described seen from a perspective of the user equipment 120, and after embodiments of the method will be described seen from a perspective of the network nod 110. These are first described in a general way. Embodiments of the methods will then be described more in detail.

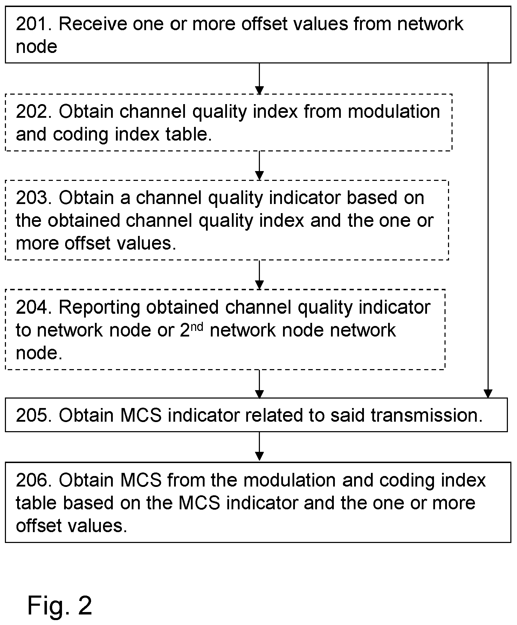

Example of embodiments of a method in the user equipment 120 for obtaining a MCS, will now be described with reference to a flowchart depicted in **Figure 2**. The MCS is to be used for a transmission between the user equipment 120 and any one or more out of the network node 110 or a second network node 112. As mentioned above, the term second network node 112 used herein may in some embodiments relate to one or more second network nodes 112, since several network nodes may be involved in the transmission. The, user equipment 120 has knowledge about a modulation and coding index table. The method comprises the following actions, which actions may be taken in any suitable order. Dashed lines of one box in Figure 2 indicate that this action is not mandatory.

**Action 201**

The user equipment 120 receives one or more offset values from the network node 110.

The one or more offset values are preferably sent less frequently than the transmission frequency for the MCS indicator. A new offset is preferable sent to the user equipment 120 when the used MCS indicator is close to maximum or minimum value. A new offset is preferable sent when a new dynamic range determined by the MCS indicator and offset value is predicted to be beneficial. For example, when the user equipment 120 is close to the network node 110 an offset value that enable selection of high MCS indices is to prefer while an offset value that enable selection of lower MCS indices is to prefer when the user equipment 120 is further away from the network node 110. In some cases where the user equipment is moving at high speed, a new updated one or more offset values may be sent every second or even every 100 ms. While in other cases where the user equipment 120 is stationary during each communication session it is only sent once during the session start up and no update is needed.

The offset value when used for MCS may be referred to as a MCS offset value herein. The user equipment 120 may receive the offset value such as e.g. an MCS offset value from the network node 110. The MCS offset value may be defined by the network node 110 based on the position and signal quality of the user equipment 120. A new updated MCS offset value may be sent to the user equipment 120 when the position and/or signal quality of the user equipment 120 have changed. E.g. assuming an offset value represented by the formula [1] and an MCS index table extended with 256QAM MCS indices e.g. 29-33, see Table 3, the network node 110 may establish that the user equipment 120 is in such good radio condition that it can cope with transmission using MCS higher than 64QAM, e.g. 256QAM and in that case send a MCS offset value above zero. Or the opposite scenario, wherein the network node 100 may establish that the user equipment 120 is not in such good radio condition that it can cope with transmission using MCS higher than 64QAM, e.g. 256QAM and in that case send a MCS offset value that is zero.

The one or more offset values may be represented by one or more MCS subset selectors from the modulation and coding index table.

In some embodiments the one or more offset values comprises multiple offset values. In these embodiments the respective offset value out of the multiple offset values may be associated with one or more out of: a rank, a quasi co-location, a downlink control information format, a Downlink control information resource such as e.g. associated with a respective EPDCCH- Physical Resource Block (PRB) set, a user equipment search space sets for a Physical Downlink Control Channel, PDCCH, or evolved PDCCH, EPDCCH, and a transmission mode.

### Action 202

To be able to obtain a channel quality indicator, which may be referred to as CQI, the user equipment 120 may first obtain a channel quality index from a modulation and coding index table. How this is performed will be further described below. This table may in some embodiments be different from the modulation and coding index table mentioned below in Action 206.

### Action 203

The user equipment 120 may then obtain the channel quality indicator based on the obtained channel quality index and the one or more offset values. How this is performed will also be further described and exemplified below.

### Action 204

In some embodiments, the user equipment 120 reports the obtained channel quality indicator to any one or more out of: the network node 110 or the second network node network node 112. The channel quality indicator together with the offset value maps to a channel quality index in a first modulation and coding index table that the network node 110 use to select a potentially different modulation and coding index in the first or the second modulation and coding index table.

### Action 205

To be able to obtain the MCS indicator related to said transmission the user equipment 120 will use an MCS indicator related to said transmission together with the one or more offset values. Thus, the user equipment 120 obtains an MCS indicator related to said transmission. This may for example be a scheduling comprising the MCS indicator, sent to the user equipment 120 when the transmission is to be started.

In LTE DL the MCS indicator is either sent prior to the transmission using PDCCH for transmitting the MCS indicator or simultaneously as the transmission using evolved PDCCH for transmitting the MCS indicator. Here user equipment may have to buffer the transmission also in theory before being able to obtain the MCS indicator. For LTE UL the MCS indicator is sent prior to the transmission for both cases for transmission of the MCS indicator.

In some embodiments, the MSC indicator is obtained by being received from the network node involved in the transmission. The network node involved in the transmission may be any one or more out of: the network node 110 or the second network node network node 112.

### Action 206

In this Action, the user equipment 120 obtains the MCS from the modulation and coding index table based on the MCS indicator and the one or more offset values.

See the example as mentioned above, i.e., the offset value represented by the formula [1], if the MSC indicator is 24, and the offset value is 6, the modulation and coding index table shall be entered at MCS index value 24 + 6 = 30 to find the MSC index. In another example, if the MSC indicator is 24, and the offset value is 0, the modulation and coding index table shall be entered at MCS index value 24 + 0 = 24 to find the MSC index. How this is performed will also be further described and exemplified below.

After Action 206 the user equipment 120 is able to determine the transport block size, based on the obtained MCS index, which was used in DL or which shall be used in UL in the transmission. For DL, the transport block size is then used to decode the transmission while for UL the transport block size is used when to encode the transmission.

Embodiments of the method will now be described seen from a perspective of the network nod 110.

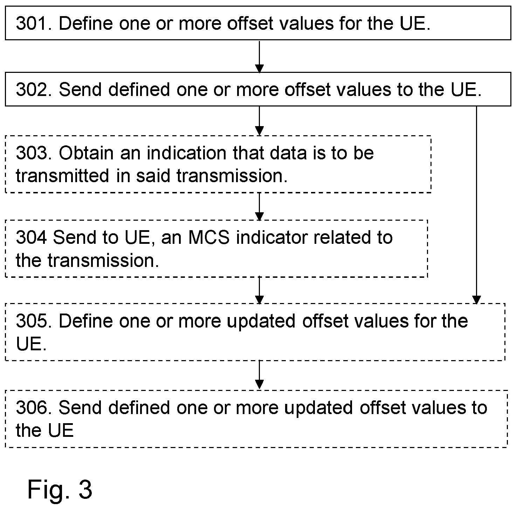

Thus, example of embodiments of a method in the network node 110 for assisting a user equipment 120 to obtain a MCS will now be described with reference to a flowchart depicted in **Figure 3**. As mentioned above, the MCS is to be used for a transmission between the user equipment 120 and any one or more out of the network node 110 or the second network node 112.

The method comprises the following actions, which actions may be taken in any suitable order. Dashed lines of one box in Figure 3 indicate that this action is not mandatory.

**Action 301**

In this Action, the network node 110 defines the one or more offset values for the user equipment 120. The defined one or more offset values are related to a modulation and coding index table. The one or more offset values are preferably sent less frequently than the transmission frequency for the MCS indicator. A new offset is preferable sent to the user equipment 120 when the used MCS indicator is close to maximum or minimum value. A new offset is preferable sent when a new dynamic range determined by the MCS indicator and offset value is predicted to be beneficial. For example, when the user equipment 120 is close to the network node 110 or second network node 112, an offset value that enable selection of high MCS indices is to prefer while an offset value that enable selection of lower MCS indices is to prefer when the user equipment 120 is further away from the network node 110 or second network node 112.

The one or more offset values may be defined by the network node 110 based on the position and signal quality of the user equipment 120. A new updated offset value may be sent to the user equipment 120 when the position and/or signal quality of the user equipment 120 have changed, see Action 305.

E.g. as mentioned above, the network node 100 may establish that the user equipment 120 is in such good radio condition that it can cope with transmission using MCS higher than 64QAM, e.g. 256QAM and in that case define an offset value above zero. Or the opposite scenario, wherein the network node 100 may establish that the user equipment 120 is not in such good radio condition that it can cope with transmission using MCS higher than 64QAM, e.g. 256QAM and in that case define an offset value that is zero. See again the example as mentioned above, if the MSC indicator is 24, and the offset value is defined to 6, the modulation and coding index table shall be entered at MCS index value 24 + 6 = 30. In another example, if the MSC indicator is 24, and the offset value is defined to 0, the modulation and coding index table shall be entered at MCS index value 24 + 0 = 24. How this is performed will also be further described and exemplified below.

The one or more offset values may be represented by one or more MCS subset selectors from the modulation and coding index table. This will be described more in detail below.

In some embodiments, the one or more offset values comprise multiple offset values. In these embodiments the respective offset value out of the multiple offset values may be associated with one or more out of: a rank, a quasi co-location, a downlink control information format, a Downlink control information resource - /description: e.g. associated with a respective ePDCCH-PRB set, a user equipment search space sets for a Physical Downlink Control Channel, PDCCH, or evolved PDCCH, (EPDCCH), and a transmission mode.

In some embodiments, wherein the defining 301 the one or more offset values for the user equipment 120, is performed based on historical values from at least one out of: a transmitted MCS or rank, a received Channel Status Information, CSI, a Reference Signal Received Power (RSRP) or a Reference Signal, Received Quality (RSRQ), and a Hybrid Automatic Repeat Request, (HARQ), retransmission.

This action will be described more in detail below.

**Action 302**

To inform the user equipment about the one or more offset values to use for obtaining MCS, the network node 110 sends the defined one or more offset values to the user equipment 120. The one or more offset values enable the user equipment 120 to obtain the MCS from the modulation and coding index table. Please note that the selected MCS may be different from the MCS obtained by the user equipment.

As mentioned above, the one or more offset values are preferably sent less frequently than the transmission frequency for the MCS indicator. A new offset is preferable sent to the user equipment 120 when the used MCS indicator is close to maximum or minimum value. A new offset is preferable sent when a new dynamic range determined by the MCS indicator and offset value is predicted to be beneficial. For example, when the user equipment 120 is close to the network node an offset value that enable selection of high MCS indices is to prefer while an offset value that enable selection of lower MCS indices is to prefer when the user equipment is further away from the base station.

**Action 303**

In some embodiments, said transmission is between the user equipment 120 and the network node 110. In these embodiments, the network node 110 may obtain an indication that data is to be transmitted in said transmission. The indication that data is to be transmitted may typically be determined and indicated by a transmission scheduler such as a transmission scheduler. For DL this is when there is data in a buffer to be sent to the user equipment 120. For UL this is when a scheduling request is received from the user equipment 120 or when a buffer status report has been received from the user equipment 120 with information about amount of uplink data to be received.

In some embodiments the network node 110 receives a CSI report from the user equipment 120 which report comprises a CQI indicator. The network node 110 may then obtain a CQI index into the CQI table from said CQI indicator together with the one or the offset values. This means that the network node 110 may receive a CSI report from the user equipment 120 with a CQI indicator. From this CQI indicator together with one or the offset values defined in action 301, a CQI index into the CQI table is obtained. This may be performed in a similar way as in Action 202 and 203. This CQI index may be used to select MCS index for downlink transmissions, see action 304.

**Action 304**

In the embodiments where Action 303 is performed, the network node 110 may sends to the user equipment 120, an MCS indicator related to the transmission. The MCS indicator may be received by the user equipment in Action 205 described above. The MCS indicator may be selected based on the one and more offset values and a CQI reported by the user equipment 120. The reported CQI may provide a suggested MCS for an imagined PDSCH transmission on a so-called CSI reference resource. The network node then selects the MCS indicator suitable for the resources used for the transmission based on the suggested MCS and the one and more offset values.

**Action 305**

In some embodiments, the network node 110 defines one or more updated offset values for the user equipment 120 based on channel quality. For example, it may be based on when selected MCS indicator is above or below a certain thresholds or, for a CQI embodiment, when reported channel quality indicator is above or below certain thresholds.

**Action 306**

In some embodiments, the network node 110 sends the defined one or more updated offset values to the user equipment 120, which one or more offset values enables the user equipment 120 to obtain an updated MCS from the modulation and coding index table.

The text below relates to any suitable embodiment above.

**Extending the MCS table**

This relates to Action 205, 206 and 301. According to some embodiments herein a modulation and coding index table such as an MCS table is extended. One possible extension of the MCS table is shown in Table 3. Entries with white fill correspond to legacy entries where entries with black fill are added for 256QAM.

| MCS Index | Modulation Order $Q_m$ | TBS Index $I_{TBS}$ |
|---|---|---|
| 0 | 2 | 0 |
| 1 | 2 | 1 |
| 2 | 2 | 2 |
| 3 | 2 | 3 |
| 4 | 2 | 4 |
| 5 | 2 | 5 |
| 6 | 2 | 6 |
| 7 | 2 | 7 |
| 8 | 2 | 8 |
| 9 | 2 | 9 |
| 10 | 4 | 9 |
| 11 | 4 | 10 |
| 12 | 4 | 11 |
| 13 | 4 | 12 |
| 14 | 4 | 13 |
| 15 | 4 | 14 |
| 16 | 4 | 15 |
| 17 | 6 | 15 |
| 18 | 6 | 16 |
| 19 | 6 | 17 |
| 20 | 6 | 18 |
| 21 | 6 | 19 |
| 22 | 6 | 20 |
| 23 | 6 | 21 |
| 24 | 6 | 22 |
| 25 | 6 | 23 |
| 26 | 6 | 24 |
| 27 | 6 | 25 |
| 28 | 6 | 26 |
| 29 | 8 | 26 |
| 30 | 8 | 27 |
| 31 | 8 | 28 |
| 32 | 8 | 29 |
| 33 | 8 | 30 |

**Table 3** *Extended DL MCS table. White entries correspond to legacy entries, where black entries are added for 256QAM*

In **Table 3** the first column is not the MCS indicator carried by PDCCH/ePDCCH but rather a MCS index value, referred to as MSC herein, that is mapped to TBS index. In legacy LTE, there is no distinction between "indicator" and "index", but here "index" is referred to what defines a table and "indicator" refers to what is signaled. The MCS may be obtained using the MCS_indicator, e.g. carried by a grant on PDCCH/ePDCCH, and the one or more offset values such as e.g. a MCS_offset which may be provided to the user equipment 120 from the network node 110 using RRC signaling as:

$$MCS = MCS\_indicator + MCS\_offset.$$

If MCS_offset = 0, 256QAM becomes disabled. If MCS_offset > 0, then 256QAM is enabled.

Note that with MCS_offset = 0, the MCS value, i.e. the MSC equals the MCS_indicator and normal up-to Release 11 of 3GPP TS 36.213 Section 7.1.7.1 operation is obtained, except for the MCS indicator values 29-31 that are used for re-transmissions. For example, a re-transmission of a transport block typically occurs when the network node 110 receives an indication that the user equipment 120 failed to decode a transmission of the transport block. When the network node 110 re-transmits the transport block it may change the modulation, the physical resource blocks used, and the encoding properties. The legacy MCS indicator values 29-31 is to indicate to the user equipment 120 different modulation while maintaining same transport block size. Since legacy supports three modulations QPSK, 16QAM, 64QAM, three different MCS indicator values are needed to indicate the modulation used for the re-transmission.

It is possible that MCS index 28 and even 27 will also employ 256QAM instead of 64QAM for a user equipment such as the user equipment 120 configured to support 256QAM. Modulation order would then be determined according to min(Q_m, Q_max) where Q_max is the highest order of modulation supported by the user equipment for this transmission.

To obtain full backward compatibility also for re-transmission MCS, the MCS indicator values [29 min{MCS_offset, 1}, 31] may be reserved for re-transmissions. With MCS_offset=0 (legacy), [29, 31] are used for retransmissions. With MCS_offset > 0 (256QAM enabled), [28, 31] are used for transmissions.

With an extended MCS table according to embodiments herein, and MCS_offset = 0, this provides full backward compatibility since the MCS indicator values [29 min(0,1), 31] = [29, 31] are reserved for re-transmissions as

MCS_indicator = 29 corresponds to: Modulation order Q_m = 2, i.e. QPSK modulation.
MCS_indicator = 30 corresponds to: Modulation order Q_m = 4, i.e. 16QAM modulation.
MCS_indicator = 31 corresponds to: Modulation order Q_m = 6, i.e. 64QAM modulation.

Thus, with MCS_offset = 0 the MCS indicator and Table 3 fully coincide with the legacy Table 1.

However, if MCS_offset > 0, then e.g.

MCS_indicator = 28 corresponds to Modulation order Q_m = 2, i.e. QPSK modulation.

MCS_indicator = 29 corresponds to: Modulation order Q_m = 4, i.e. 16QAM modulation.

MCS_indicator = 30 corresponds to: Modulation order Q_m = 6, i.e. 64QAM modulation.

MCS_indicator = 31 corresponds to: Modulation order Q_m = 8, i.e. 256QAM modulation

Thus with e.g. MCS_offset = 6 the range for the MCS indicator for new transmissions is [0,27] as follows

MCS_indicator = 0: Specify index 6+0=6 in Table 3.
MCS_indicator = 1: Specify index 6+1=7 in Table 3.
...
MCS_indicator = 22: Specify index 6+22=28 in Table 3.
MCS_indicator=23: Specify index 6+23=29 in Table 3, i.e. 256QAM
..
MCS_indicator=27: Specify index 6+27=33 in Table 3, i.e. 256QAM

Hence, the preferable range for the MCS_offset is [0,6].

If fewer modulations order is needed for retransmissions the reserved indicators may be fewer. In a special case fewer values are used for retransmissions instead using a differential coding compared to the last explicitly signaled modulation order for the HARQ process and code word, e.g.

- MCS_indicator = 30: Modulation order Q_m = Q'_m, i.e. same modulation
- MCS_indicator = 31: Modulation order Q_m = Q'_m - 2, i.e. lower modulation

**Extending CQI table**

This relates to Action 202 and 203 above. One possible extension of the CQI table is shown in **Table 4.**

| CQI index | modulation | code rate x 1024 | efficiency |
|---|---|---|---|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 256QAM | 579 | 4.5234 |
| 14 | 256QAM | 655 | 5.1172 |
| 15 | 256QAM | 711 | 5.5547 |
| 16 | 256QAM | 772 | 6.0313 |
| 17 | 256QAM | 873 | 6.8203 |
| 18 | 256QAM | 948 | 7.4063 |

**Table 4** *Extended CQI table. White entries correspond to legacy entries, where black entries are added or changed for 256QAM.*

The CQI index table may be extended like Table 4. The user equipment 120 obtains a suitable CQI index from Table 4 and then obtains a CQI indicator based on the CQI index and the one and more offset values.

Please note that legacy use the term "index" both for the index in the table and what is signaled. In embodiments herein it is distinguished according to the following:

"index" corresponds to table entries
"indicator" corresponds to what is signaled.

The CQI index is obtained by the user equipment 120 measuring on downlink signal quality estimating a suitable efficiency to receive a downlink transmission with, that is highest efficiency that can be decoded with a 90% probability. The corresponding CQI index is achieved from Table 4. An. A CQI_indicator is calculated based on CQI index and one or more offset values received from the network node,

$$CQI\_indicator = CQI\_index - CQI\_offset$$

The CQI_indicator is included in a CSI report and sent on Physical Uplink Shared Channel (PUSCH) or Physical Uplink Control Channel (PUCCH) from the user equipment 120 to the network node. The network node 110 receives the CSI report including the CQI_indicator and calculates the CQI index as

$$CQI\_index = CQI\_indicator + CQI\_offset.$$

This CQI_index may be used by the network node 110 to select MCS_index for downlink transmission. It may also be used for other purposes such as scheduling decisions, downlink power control and others.

For legacy UE:s which the user equipment 120 may be, no offset is sent to the user equipment 120 and the legacy CQI table, Table 2, is used without any offset.

If CQI_offset = 0 256 QAM may still indicated for the highest CQI_indicators that result in CQI_index 13-15. Alternatively CQI_offset=0 may indicate fall back to legacy CQI table and, 256QAM becomes disabled and normal up-to Release 11 of 3GPP TS 36.213, Section 7.2.3 standard operation is obtained. Alternatively may a MCS_offset=0 indicate a fallback to legacy CQI table and a MCS_offset >0 may indicate that the new CQI table should be employed.

Since the reported CQI channel quality and desired code rate MCS follows each other the one or more offset values may be set commonly for MCS and CQI. A fixed factor CQIMCS_factor of for example 2 may be better applied to adjust for the difference in size and quality steps as:

$$CQI\_offset = MCS\_offset/CQIMCS\_factor$$

The CQIMCS_factor may also be configured for example signaled over RRC protocol or broadcasted in the system information from the network node to the UE.

**Rank-specific offset**

The transmission rank, the number of MIMO layers in spatial multiplexing transmission, of the channel has profound impact on the MCS operating point and CQI reporting level. When the rank is low, higher MCS and CQI values may be chosen than if the rank is high. This means that it may be beneficial that the one or more offset values, in this embodiment the respective values out of multiple offset values, is set individually per possible rank. This means that the user equipment 120 may obtain the MCS value, i.e. MCS as

$$MCS = MCS\_indicator + MCS\_offset(R),$$

where R is rank of the granted transmission and similarly for the CQI reporting where rank R is the Rank Indicator (RI) included in the CSI report.

For example, in LTE a Transport Block (TB) of size TBS is sent over air as encoded Code Word (CW). LTE currently supports sending at most 2 CW, while the transmission rank (layers) is higher. For rank 2 and higher 2 CW are used, and LTE currently supports up to 8 layers. Since the MCS is selected individually for the up-to two code words, this suggests that in an alternative embodiment the respective offset value out of the multiple offset values, such as the MCS_offset value, is set individually per possible number of layers a TB may be carried over. For example, if rank 4 is supported then each TB may be sent on 1 or 2 layers and hence MCS_offset may have one value for transmitting a CW over 1 layer and another value for 2 layers.

**Transmission point specific MCS offset**

This relates to Action 201 and 301 above. Support of higher order modulation is dependent on low Error Vector Magnitude (EVM) at the transmitter side, the EVM depends on factor such as output power. In some coordinated multi-point scenarios different output powers may be employed by different transmission points resulting in different EVM. A transmission point may be a eNodeB an RRU, a remote radio head, or an active Distributed Antenna System (DAS). It may hence be of interest to have separate off set values such as MCS_offset values dependent on the current transmission point. For example the MCS_offset may be different for different PDSCH Resource Element (RE) Mapping and Quasi-Co-Location Indicator" signaled in the DCI as defined in 3GPP TS 36.213 v11.3.0 section 7.1.9 and 7.1.10. Table 5 shows PDSCH RE Mapping and Quasi-Co-Location Indicator mapping to different MCS_offsets. The EVM is a measure used to quantify the performance of a digital radio transmitter or receiver. A signal sent by an ideal transmitter or received by a receiver would have all constellation points precisely at the ideal locations, however various imperfections in the implementation such as carrier leakage, low image rejection ratio, phase noise etc. cause the actual constellation points to deviate from the ideal locations. Informally, EVM is a measure of how far the points are from the ideal locations.

*Table 5 PDSCH RE Mapping and Quasi-Co-Location Indicator mapping to different MCS_offsets*

| Value of 'PDSCH RE Mapping and Quasi-Co-Location Indicator' field | MCS |
|---|---|
| '00' | MCS_indicator + MCS_offset(0) |
| '01' | MCS_indicator + MCS_offset(1) |
| '10' | MCS_indicator + MCS_offset(2) |
| '11' | MCS_indicator + MCS_offset(3) |

**Explicit MCS subset indication**

In one embodiment of the invention a table like Table 2 is specified. A UE configured to use 256QAM also receives an explicitly signaled subset of the table to use. The subset may have a fixed size of 28 entries if every modulation order is to be supported for retransmissions. The entries in the table may be signaled using a bit set or compressed by using combinatorial index r defined for example as:

$$r = \sum_{i=0}^{M-1} \left\langle \begin{array}{c} N - s_i \\ M - i \end{array} \right\rangle$$

where the set $\left\{ s_i \right\}_{i=0}^{M-1}$, $\left( 1 \leq s_i \leq N, \quad s_i < s_{i+1} \right)$ contains the M sorted table indices and is the extended binomial coefficient and N is the total size of the table, resulting in unique label $r \in \left\{ 0, \cdots, \left( \begin{array}{c} N \\ M \end{array} \right) - 1 \right\}$

For legacy user equipments and user equipments not configured for 256QAM operation the first 29 entries in the table is used, i.e. same as up-to-R11 3GPP operation. Also a subset indication may be applied per rank or transmission point. It may be noted that this is a special case of signaling an offset value, where one offset is given per MCS indicator value.

**Fallback operation**

To be able to robustly handle fast variation of channel quality and/or operation during periods of ambiguity in user equipment configuration, a fallback mode of operation may be required.

This relates to Action 201 and 302 above. In some embodiments, different offset values such as MCS_offset values or sub tables are used for different DCI formats. For example data scheduled using DCI format 1A/1C may apply the legacy MCS table operation, MCS_offset = 0 and modulation order restriction to 6, while other DCI formats like format 1/2/2A/2B/2C/2D apply the configured MCS_offset or subset where the DCI format carry an indication of the allocated resource and the MCS indicator TS 36.212 V11.3.0 section 5.3.3.1.

In some embodiments different offset values such as MCS_offset values or sub tables are used dependent on the Radio Network Temporary Identity (RNTI) by with a DCI is scrambled. For example DCI may be scrambled by a Semi-Persistent Scheduling (SPS) Cell ©-RNTI, System Information (SI)-RNTI or Random Access (RA)-RNTI apply different offset values such as MCS_offset values or sub tables than DCIs scrambled by the C-RNTI.

In some embodiments different offset values such as MCS_offset values or sub tables are used dependent on the search space in with the DCI is received. For example a DCI received in a common search space apply a MCS_offset of 0 and modulation order restriction to 6, while a DCI received in the UE specific search space employ the configured MCS_offset. In some other embodiments different offset values such as MCS_offset values or sub tables may be used dependent on which EPDCCH-PRB set the DCI is received in. For an EPDCCH capable user equipment such as the user equipment 120, up to two EPDCCH-PRB sets may be configured, where each such set may include configuration of offset values such as MCS_offset values or sub tables.

**Implicit offset**

This relates to Action 201 and 302. The preferred method to set the one or more offset values are by explicit signaling, for by example RRC signaling. However the one or more offset values may be defined implicitly from other radio quality measured which are correlated with MCS and CQI.

RSRP may be reported from the user equipment 120 to the network such as the network node 110. It is correlated with the desired MCS. At a low RSRP it is unlikely with a high CQI report and that it is desired to use a high MCS index. A table may be designed defining the offset out from latest reported RSRP.

Near the cell edge in dense networks the RSRP may be high and the desired MCS may still be low because of interference from neighbor cells. RSRQ may then be used which is also take the interference into account and is even more correlated with CQI and MCS. Similarly as for RSRP a table defining the one or more offset values from latest reported RSRQ may be used. Also combinations of RSRP and RSRQ may be used. For example a large offset is only set if both RSRP and RSRQ is high.

The history of used MCS or reported CQI may also be used. Protocol rules may be set so that if approaching the edge of the dynamic index range the one or more offset values are adjusted. For example if highest MCS_indicator is used the one or more offset values such as the MCS_offset value are increased with 1.

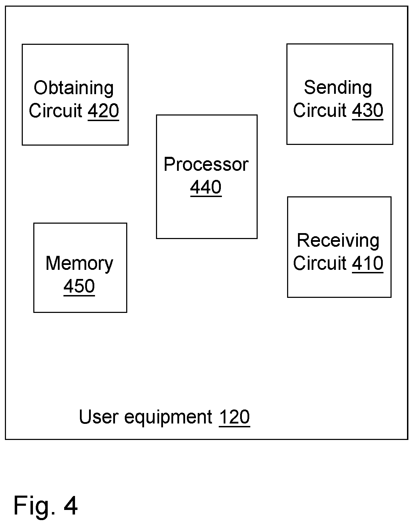

To perform the method actions for obtaining a MCS described above in relation to Figure 2, the user equipment 120 comprises the following arrangement depicted in **Figure 4.** As mentioned above the MCS is to be used for a transmission between the user equipment 120 and any one or more out of the network node 110 or the second network node 112. The user equipment 120 has knowledge about a modulation and coding index table.

The user equipment 120 comprises a **receiving circuit 410** configured to receive one or more offset values from the network node 110.

The one or more offset values may be represented by one or more MCS subset selectors from the modulation and coding index table.

In some embodiments, the one or more offset values comprise multiple offset values. In these embodiments the respective offset value out of the multiple offset values may be associated with one or more out of: a rank, a quasi co-location, a downlink control information format, a Downlink control information resource, a user equipment search space sets for a Physical Downlink Control Channel, PDCCH, or evolved PDCCH, EPDCCH, and a transmission mode.

The one or more offset values may be represented by one or more MCS subset selectors from the modulation and coding index table.

The user equipment 120 further comprises an **obtaining circuit 420** configured to obtain an MCS indicator.

The obtaining circuit 420 is further configured to obtain the MCS from the modulation and coding index table based on the MCS indicator and the one or more offset values.

The obtaining circuit 420 may further be configured to obtain a channel quality index from the modulation and coding index table, and obtain a channel quality indicator based on the obtained channel quality index and the one or more offset values.

In some embodiments, the obtaining circuit 420 further is configured to obtain the MSC indicator by receiving it from the network node involved in the transmission. The network node involved in the transmission is any one or more out of: the network node 110 or the second network node network node 112.

The user equipment 120 further comprises a **sending circuit 430** which may be configured to report the obtained channel quality indicator to any one or more out of: the network node 110 or the second network node network node 112.

The embodiments herein for obtaining a MCS may be implemented through one or more processors, such as a **processor 440** in the user equipment 120 depicted in Figure 4, together with computer program code for performing the functions and actions of the embodiments herein. The program code mentioned above may also be provided as a computer program product, for instance in the form of a data carrier carrying computer program code for performing the embodiments herein when being loaded into the in user equipment 120. One such carrier may be in the form of a CD ROM disc. It is however feasible with other data carriers such as a memory stick. The computer program code may furthermore be provided as pure program code on a server and downloaded to the user equipment 120.

The user equipment 120 may further comprise a **memory 450** comprising one or more memory units. The memory 450 is arranged to be used to store obtained information, measurements, data, configurations, schedulings, and applications to perform the methods herein when being executed in user equipment 120.

Those skilled in the art will also appreciate that the **receiving circuit 410,** the **obtaining circuit 420** and the **sending circuit 430** described above may refer to a combination of analog and digital circuits, and/or one or more processors configured with software and/or firmware, e.g. stored in the memory 450, that when executed by the one or more processors such as the processor 440 perform as described above. One or more of these processors, as well as the other digital hardware, may be included in a single application-specific integrated circuitry (ASIC), or several processors and various digital hardware may be distributed among several separate components, whether individually packaged or assembled into a system-on-a-chip (SoC).

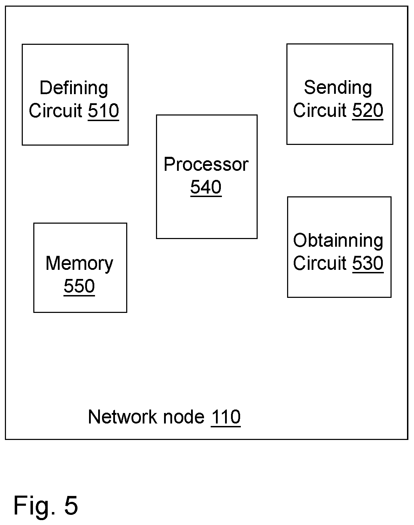

To perform the method actions for assisting a user equipment 120 to obtain a MCS described above in relation to Figure 3, the network node 110 comprises the following arrangement depicted in **Figure 5.** As mentioned above, the MCS is to be used for a transmission between the user equipment 120 and any one or more out of the network node 110 or a second network node 112.

The network node 110 comprises a **defining circuit 510** configured to define one or more offset values for the user equipment 120. The defined one or more offset values are related to a modulation and coding index table.

In some embodiments, the defining circuit 510 further is configured to define one or more updated offset values for the user equipment 120 based on channel quality. The updated offset value is related to the modulation and coding index table.

The one or more offset values may be represented by one or more MCS subset selectors from the modulation and coding index table.

In some embodiments, the one or more offset values comprise multiple offset values. In these embodiments, the respective offset value out of the multiple offset values may be associated with one or more out of: a rank, a quasi co-location, a downlink control information format, a Downlink control information resource, a user equipment search space sets for a Physical Downlink Control Channel, PDCCH, or evolved PDCCH, ePDCCH, and a transmission mode.

In some embodiments, wherein the defining circuit 510 further is configured to define the one or more offset values for the user equipment 120 based on historical values from at least one out of: a transmitted MCS or rank, a received Channel Status Information, CSI, a Reference Signal Received Power, RSRP, or a Reference Signal Received Quality, RSRQ, and a Hybrid Automatic Repeat Request, HARQ, retransmission.

The network node 110 further comprises a **sending circuit 520** configured to send the defined one or more offset values to the user equipment 120. The one or more offset values enable the user equipment 120 to obtain the MCS from the modulation and coding index table.

In some embodiments, the sending circuit 520 further is configured to send the defined one or more updated offset values to the user equipment 120. The one or more offset values enable the user equipment 120 to obtain an updated MCS from the modulation and coding index table.

In some embodiments, said transmission is arranged to be between the user equipment 120 and the network node 110. In these embodiments, the network node 110 may further comprise **an obtaining circuit 530** configured to obtain an indication that data is to be transmitted in said transmission. In these embodiments, the sending circuit 520 may further be configured to send to the user equipment 120, an MCS indicator related to the transmission. The MCS indicator may be selected based on the one and more offset values and a CQI reported by the user equipment 120.

In some embodiments, the obtaining circuit (530) further is configured to receive a CSI report from the user equipment (120) which report comprises a CQI indicator, and obtain a CQI index into the CQI table from said CQI indicator together with the one or the offset values.

The embodiments herein for assisting a user equipment 120 to obtain a MCS may be implemented through one or more processors, such as a **processor 540** in the network node 110 depicted in Figure 5, together with computer program code for performing the functions and actions of the embodiments herein. The program code mentioned above may also be provided as a computer program product, for instance in the form of a data carrier carrying computer program code for performing the embodiments herein when being loaded into the in the the network node 110. One such carrier may be in the form of a CD ROM disc. It is however feasible with other data carriers such as a memory stick. The computer program code may furthermore be provided as pure program code on a server and downloaded to the the network node 110.

The network node 111 may further comprise a **memory 550** comprising one or more memory units. The memory 450 is arranged to be used to store obtained information, measurements, data, configurations, schedulings, and applications to perform the methods herein when being executed in the the network node 110.

Those skilled in the art will also appreciate that the defining circuit 510, the sending circuit 520 and the obtaining circuit 530 described above may refer to a combination of analog and digital circuits, and/or one or more processors configured with software and/or firmware, e.g. stored in the memory 550, that when executed by the one or more processors such as the processor 540 perform as described above. One or more of these processors, as well as the other digital hardware, may be included in a single application-specific integrated circuitry (ASIC), or several processors and various digital hardware may be distributed among several separate components, whether individually packaged or assembled into a system-on-a-chip (SoC).

According to some example embodiments herein, a method is provided for defining modulation and coding signaling protocol in a wireless communication network comprising a terminal and a network node. The method comprises:

- a predefined modulation and coding index table,
- a protocol indicator with smaller range than the table,
- obtaining an offset, and
- indexing the modulation and coding table with a combination of the offset and the protocol indicator.

In some embodiments the signaling protocol is the downlink scheduling DCI protocol and the indexing table is the MCS table.

In some embodiments the signaling protocol is the channel status quality indication reporting and the indexing table is the CQI table.

In some embodiments the offset is set per rank,

In some embodiments the offset is defined in the network node and signaled to the terminal with RRC protocol.

In some embodiments the offset is set based on latest signaled radio quality measures, one or more of RSRP, RSRQ, MCS or CQI.

When using the word "comprise" or "comprising" it shall be interpreted as nonlimiting, i.e. meaning "consist at least of".

The embodiments herein are not limited to the above described preferred embodiments. Various alternatives, modifications and equivalents may be used. Therefore, the above embodiments should not be taken as limiting the scope of the invention, which is defined by the appending claims.

**Claims**

1. A method in a user equipment (120) for obtaining a Modulation and Coding Scheme, MCS, which MCS is to be used for a transmission between the user equipment (120) and any one or more out of the network node (110) or a second network node (112), which user equipment (120) has knowledge about a modulation and coding index table, the method comprising

   *receiving* (201) one or more offset values from the network node (110),
   *obtaining* (205) an MCS indicator related to said transmission,
   *obtaining* (206) the MCS from the modulation and coding index table based on a function of the MCS indicator and the one or more offset values,
   wherein the one or more offset values comprise multiple offset values, and wherein the respective offset value out of the multiple offset values are associated with one or more out of:

      a rank,
      a quasi co-location,
      a downlink control information format, a Downlink control information resource, comprising any one out of:
      a user equipment search space for a Physical Downlink Control Channel, PDCCH, or evolved PDCCH, EPDCCH, and/or evolved PDCCH-Physical Resource Block, PRB,-set, EPDCCH-PRB-set,

      a transmission mode,

   an RNTI.

2. The method according to claim 1, wherein the one or more offset values are represented by one or more MCS subset selectors from the modulation and coding index table.

3. A method according to any of the claims 1-2, further comprising,

   *obtaining* (202) a channel quality index from a channel quality indicator table,
   *obtaining* (203) a channel quality indicator based on the obtained channel quality index and the one or more offset values, and
   *reporting* (204) the obtained channel quality indicator to any one or more out of: the network node (110) or the second network node (112).

4. A method according to any of the claims 1-3, wherein the MSC indicator is obtained by being received from the network node involved in the transmission, which network node involved in the transmission is any one or more out of: the network node (110) or the second network node (112).

5. A method in a network node (110) for assisting a user equipment (120) to obtain a Modulation and Coding Scheme, MCS, which MCS is to be used for a transmission between the user equipment (120) and any one or more out of the network node (110) or a second network node (112), the method comprising:

   *defining* (301) one or more offset values for the user equipment (120), which defined one or more offset values are related to a modulation and coding index table, and
   *sending* (302) the defined one or more offset values to the user equipment (120), which one or more offset values enables the user equipment (120) to obtain the MCS from the modulation and coding index table based on a function of a MCS indicator and the one or more offset values,
   wherein the one or more offset values comprise multiple offset values, and wherein the respective offset value out of the multiple offset values are associated with one or more out of:

      a rank,
      a quasi co-location,
      a downlink control information format,
      a Downlink control information resource, comprising any one out of: a user equipment search space for a Physical Downlink Control Channel, PDCCH, or evolved PDCCH, EPDCCH, and/or evolved PDCCH- Physical Resource Block, PRB,-set, EPDCCH- PRB-set,
      a transmission mode,

an RNTI.

6. The method according to claim 5, wherein the one or more offset values are represented by one or more MCS subset selectors from the modulation and coding index table.

7. The method according to any of the claims 5-6, wherein said transmission is between the user equipment (120) and the network node (110), the method further comprising:

*obtaining* (303) an indication that data is to be transmitted in said transmission,
*sending* (304) to the user equipment (120), an MCS indicator related to the transmission, which MCS indicator is selected based on the one and more offset values and a CQI reported by the user equipment (120).

8. The method according to any of the claims 5-7, further comprising:

*defining* (305) one or more updated offset values for the user equipment (120) based on channel quality, which updated offset value is related to the modulation and coding index table, and
*sending* (306) the defined one or more updated offset values to the user equipment (120), which one or more offset values enables the user equipment (120) to obtain an updated MCS from the modulation and coding index table.

9. The method according to any of the claims 5-8, wherein the defining (301) the one or more offset values for the user equipment (120), is performed based on historical values from at least one out of:

a transmitted MCS or rank,
a received Channel Status Information, CSI,
a Reference Signal Received Power, RSRP, or a Reference Signal Received Quality, RSRQ, and

a Hybrid Automatic Repeat Request, HARQ, retransmission.

10. The method according to any of the claims 5-9, further comprising:

receiving a CSI report from the user equipment (120) which report comprises a CQI indicator,
obtaining a CQI index into the CQI table from said CQI indicator together with the one or more offset values.

11. A user equipment (120) for obtaining a Modulation and Coding Scheme, MCS, which MCS is to be used for a transmission between the user equipment (120) and any one or more out of the network node (110) or a second network node (112), which user equipment (120) has knowledge about a modulation and coding index table, the user equipment (120) comprising a receiving circuit (410) configured to receive one or more offset values from the network node (110),
an obtaining circuit (420) configured to obtain an MCS indicator related to said transmission,
which obtaining circuit (420) further is configured to obtain the MCS from the modulation and coding index table based on a function of the MCS indicator and the one or more offset values,
wherein the one or more offset values comprise multiple offset values, and wherein the respective offset value out of the multiple offset values are associated with one or more out of:

a rank,
a quasi co-location,
a downlink control information format, a Downlink control information resource, comprising any one out of: a user equipment search space for a Physical Downlink Control Channel, PDCCH, or evolved PDCCH, EPDCCH, and/or evolved PDCCH-Physical Resource Block, PRB,-set, EPDCCH-PRB-set,

a transmission mode,
an RNTI.

12. The user equipment (120) according to claim 11, wherein the one or more offset values are represented by one or more MCS subset selectors from the modulation and coding index table.

13. A user equipment (120) according to any of the claims 11-12, wherein

the obtaining circuit (420) further is configured to obtain a channel quality index from a channel quality indicator table, and obtain a channel quality indicator based on the obtained channel quality index and the one or more offset values, and

wherein the user equipment further comprises a sending circuit (430) configured to report the obtained channel quality indicator to any one or more out of: the network node (110) or the second network node (112).

14. A user equipment (120) according to any of the claims 11-13, wherein obtaining circuit (420) further is configured to obtain the MSC indicator by receiving it from the network node involved in the transmission, which network node involved in the transmission is any one or more out of: the network node (110) or the second network node (112).

15. A network node (110) for assisting a user equipment (120) to obtain a Modulation and Coding Scheme, MCS, which MCS is to be used for a transmission between the user equipment (120) and any one or more out of the network node (110) or a second network node (112), the network node (110) comprising:

a defining circuit (510) configured to define one or more offset values for the user equipment (120), which defined one or more offset values are related to a modulation and coding index table, and

a sending circuit (520) configured to send the defined one or more offset values to the user equipment (120), which one or more offset values enables the user equipment (120) to obtain the MCS from the modulation and coding index table based on a function of a MCS indicator and the one or more offset values,

wherein the one or more offset values comprise multiple offset values, and wherein the respective offset value out of the multiple offset values are associated with one or more out of:

a rank,
a quasi co-location,
a downlink control information format, a Downlink control information resource, comprising any one out of:
a user equipment search space for a Physical Downlink Control Channel, PDCCH, or evolved PDCCH, EPDCCH, and/or evolved PDCCH-Physical Resource Block, PRB,-set, EPDCCH-PRB-set,

a transmission mode,

an RNTI.

16. The network node (110) according to claim 15, wherein the one or more offset values are represented by one or more MCS subset selectors from the modulation and coding index table.

17. The network node (110) according to any of the claims 15-16, wherein said transmission arranged to be between the user equipment (120) and the network node (110), the network node (110) further comprising:

an obtaining circuit (530) configured to obtain an indication that data is to be transmitted in said transmission, and wherein the sending circuit (520) further is configured to send to the user equipment (120), an MCS indicator related to the transmission, which MCS indicator is selected based on the one and more offset values and a CQI reported by the user equipment (120).

18. The network node (110) according to any of the claims 15-17, wherein:

the defining circuit (510) further is configured to define one or more updated offset values for the user equipment (120) based on channel quality, which updated offset value is related to the modulation and coding index table, and wherein

the sending circuit (520) further is configured to send the defined one or more updated offset values to the user equipment (120), which one or more offset values enables the user equipment (120) to obtain an updated MCS from the modulation and coding index table.

19. The network node (110) according to any of the claims 15-18, wherein the defining circuit (510) further is configured to define the one or more offset values for the user equipment (120) based on historical values from at least one out of:

a transmitted MCS or rank,
a received Channel Status Information, CSI,
a Reference Signal Received Power, RSRP, or a Reference Signal Received Quality, RSRQ, and

a Hybrid Automatic Repeat Request, HARQ, retransmission.

20. The network node (110) according to any of the claims 15-19, wherein the obtaining circuit (530) further is configured to

receive a CSI report from the user equipment (120) which report comprises a CQI indicator, and
obtain a CQI index into the CQI table from said CQI indicator together with the one or more offset values.

**Patentansprüche**

1. Verfahren in einem Benutzergerät (120) zum Herstellen eines Modulations- und Codierungsschemas, MCS, wobei das MCS für eine Übertragung zwischen dem Benutzergerät (120) und jeglichem einen oder mehreren von dem Netzknoten (110) oder einem zweiten Netzknoten (112) verwendet werden soll, wobei das Benutzergerät (120) Kenntnis über eine Modulations- und Codierungsindextabelle aufweist, wobei das Verfahren Folgendes umfasst:

*Empfangen* (201) von einem oder mehreren Versatzwerten von dem Netzknoten (110),
*Herstellen* (205) eines MCS-Indikators im Zusammenhang mit der Übertragung,
Herstellen (206) des MCS aus der Modulations- und Codierungsindextabelle basierend auf einer Funktion des MCS-Indikators und dem einen oder den mehreren Versatzwerten,
wobei der eine oder die mehreren Versatzwerte mehrfache Versatzwerte umfassen, und
wobei der jeweilige Versatzwert der mehrfachen Versatzwerte mit einem oder mehreren der Folgenden assoziiert sind:

einem Rang,
einer Quasi-Co-Position,
einem Downlink-Steuerinformationsformat,
einer Downlink-Steuerinformationsressource, umfassend jeglichen aus Folgenden: einen Benutzergerätsuchraum für einen physischen Downlink-Steuerkanal, PDCCH, oder weiterentwickelten PDCCH, EPDCCH, und/oder einen physischen Ressourcenblock PRB-Satz eines erweiterten PDCCHs, EPDCCH-PRB-Satz, einen Übertragungsmodus, eine RNTI.

2. Verfahren nach Anspruch 1, wobei der eine oder die mehreren Versatzwerte durch einen oder mehrere MCS-Untersatz-Selektoren aus der Modulations- und Codierungsindextabelle dargestellt werden.

3. Verfahren nach einem der Ansprüche 1-2, ferner umfassend,
*Herstellen* (202) eines Kanalqualitätsindexes aus einer Kanalqualitätsindikatortabelle,
*Herstellen* (203) eines Kanalqualitätsindikators basierend auf dem hergestellten Kanalqualitätsindex und dem einen oder den mehreren Versatzwerten, und
*Berichten* (204) des hergestellten Kanalqualitätsindikators an einen oder mehreren von: dem Netzknoten (110) oder dem zweiten Netzknoten (112).

4. Verfahren nach einem der Ansprüche 1-3, wobei der MSC-Indikator hergestellt wird, indem er von dem Netzknoten empfangen wird, der an der Übertragung teilnimmt, wobei der an der Übertragung teilnehmende Netzknoten jeglicher oder mehrere von Folgenden sind: dem Netzknoten (110) oder dem zweiten Netzknoten (112).

5. Verfahren in einem Netzknoten (110) zum Unterstützen eines Benutzergeräts (120), ein Modulations- und Codierungsschema, MCS, herzustellen, wobei das MCS für eine Übertragung zwischen dem Benutzergerät (120) und jeglichem einen oder mehreren von dem Netzknoten (110) oder einem zweiten Netzknoten (112) verwendet werden soll, wobei das Verfahren Folgendes umfasst:

*Definieren* (301) von einem oder mehreren Versatzwerten für das Benutzergerät (120), wobei die definierten einen oder mehreren Versatzwerte im Zusammenhang mit einer Modulations- und Codierungsindextabelle stehen, und
Senden (302) des definierten einen oder mehreren Versatzwerte an das Benutzergerät (120), wobei der eine oder die mehreren Versatzwerte das Benutzergerät (120) aktivieren, um das MCS aus der Modulations- und Codierungsindextabelle herzustellen, basierend auf einer Funktion eines MCS-Indikators und dem einen oder den mehreren Versatzwerten,
wobei der eine oder die mehreren Versatzwerte mehrfache Versatzwerte umfassen, und

wobei der jeweilige Versatzwert der mehrfachen Versatzwerte mit einem oder mehreren der Folgenden assoziiert sind:

einem Rang,
einer Quasi-Co-Position,
einem Downlink-Steuerinformationsformat,
einer Downlink-Steuerinformationsressource, umfassend jeglichen aus Folgenden: einen Benutzergerätsuchraum für einen physischen Downlink-Steuerkanal, PDCCH, oder weiterentwickelten PDCCH, EPDCCH, und/oder einen physischen Ressourcenblock PRB-Satz eines erweiterten PDCCHs, EPDCCH-PRB-Satz,
einen Übertragungsmodus,
eine RNTI.

6. Verfahren nach Anspruch 5, wobei der eine oder die mehreren Versatzwerte durch einen oder mehrere MCS-Untersatz-Selektoren aus der Modulations- und Codierungsindextabelle dargestellt werden.

7. Verfahren nach einem der Ansprüche 5-6, wobei die Übertragung zwischen dem Benutzergerät (120) und dem Netzknoten (110) stattfindet, wobei das Verfahren ferner Folgendes umfasst:

*Herstellen* (303) einer Angabe, dass in der Übertragung Daten übertragen werden sollen,
*Senden* (304), an das Benutzergerät (120), eines MCS-Indikators im Zusammenhang mit der Übertragung, wobei der MCS-Indikator basierend auf dem einen oder den mehreren Versatzwerten und einem von dem Benutzergerät (120) berichteten CQI ausgewählt ist.

8. Verfahren nach einem der Ansprüche 5-7, ferner umfassend:

*Definieren* (305) von einem oder mehreren aktualisierten Versatzwerten für das Benutzergerät (120) basierend auf einer Kanalqualität, wobei der aktualisierte Versatzwert mit der Modulations- und Codierungsindextabelle in Zusammenhang steht, und
*Senden* (306) des definierten einen oder der mehreren aktualisierten Versatzwerte an das Benutzergerät (120), wobei der eine oder die mehreren Versatzwerte das Benutzergerät (120) aktivieren, um ein aktualisiertes MCS aus der Modulations- und Codierungsindextabelle herzustellen.

9. Verfahren nach einem der Ansprüche 5-8, wobei das Definieren (301) des einen oder der mehreren Versatzwerte für das Benutzergerät (120) basierend auf historischen Werten von zumindest einem der Folgenden durchgeführt wird:

ein übertragenes MCS oder ein Rang,
eine empfangene Kanalstatusinformation, CSI,
eine empfangene Leistung des Referenzsignals, RSRP, oder eine empfangene Qualität des Referenzsignals, RSRQ, und

eine hybride automatische Wiederholungsanfragen HARQ-Neuübertragung.

10. Verfahren nach einem der Ansprüche 5-9, ferner umfassend:

Empfangen eines CSI-Berichts von dem Benutzergerät (120), wobei der Bericht einen CQI-Indikator umfasst,
Herstellen eines CQI-Indexes in der CQI-Tabelle aus dem CQI-Indikator zusammen mit dem einen oder den mehreren Versatzwerten.

11. Benutzergerät (120) zur Herstellung eines Modulations- und Codierungsschemas, MCS, wobei das MCS für eine Übertragung zwischen dem Benutzergerät (120) und jeglichem einen oder mehreren von dem Netzknoten (110) oder einem zweiten Netzknoten (112) verwendet werden soll, wobei das Benutzergerät (120) Kenntnis über eine Modulations- und Codierungsindextabelle aufweist, wobei das Benutzergerät (120) Folgendes umfasst:

eine Empfangsschaltung (410), die konfiguriert ist, um einen oder mehrere Versatzwerte von dem Netzknoten (110) zu empfangen,
eine Herstellungsschaltung (420), die konfiguriert ist, um einen MCS-Indikator im Zusammenhang mit der Übertragung herzustellen,

wobei die Herstellungsschaltung (420) ferner konfiguriert ist, um das MCS aus der Modulations- und Codierungsindextabelle basierend auf einer Funktion des MCS-Indikators und dem einen oder den mehreren Versatzwerten herzustellen,

wobei der eine oder die mehreren Versatzwerte mehrfache Versatzwerte umfassen, und

wobei der jeweilige Versatzwert der mehrfachen Versatzwerte mit einem oder mehreren der Folgenden assoziiert sind:

> einem Rang,
> einer Quasi-Co-Position,
> einem Downlink-Steuerinformationsformat,
> einer Downlink-Steuerinformationsressource, umfassend jeglichen aus Folgenden: einen Benutzergerätsuchraum für einen physischen Downlink-Steuerkanal, PDCCH, oder weiterentwickelten PDCCH, EPDCCH, und/oder einen physischen Ressourcenblock PRB-Satz eines erweiterten PDCCHs, EPDCCH-PRB-Satz,
> einen Übertragungsmodus,
> eine RNTI.

12. Benutzergerät (120) nach Anspruch 11, wobei der eine oder die mehreren Versatzwerte durch einen oder mehrere MCS-Untersatz-Selektoren aus der Modulations- und Codierungsindextabelle dargestellt sind.

13. Benutzergerät (120) nach einem der Ansprüche 11-12, wobei
die Herstellungsschaltung (420) ferner konfiguriert ist, um einen Kanalqualitätsindex aus einer Kanalqualitätsindikatortabelle herzustellen und einen Kanalqualitätsindikator basierend auf dem hergestellten Kanalqualitätsindex und dem einen oder den mehreren Versatzwerten herzustellen, und
wobei das Benutzergerät ferner eine Sendeschaltung (430) umfasst, die konfiguriert ist, um den hergestellten Kanalqualitätsindikator an einen oder mehreren von dem Netzknoten (110) oder dem zweiten Netzknoten (112) zu berichten.

14. Benutzergerät (120) nach einem der Ansprüche 11-13, wobei die Herstellungsschaltung (420) ferner konfiguriert ist, um den MSC-Indikator herzustellen, indem er von dem Netzknoten empfangen wird, der an der Übertragung teilnimmt, wobei der an der Übertragung teilnehmende Netzknoten jeglicher oder mehrere von Folgenden sind: dem Netzknoten (110) oder dem zweiten Netzknoten (112).

15. Netzknoten (110) zum Unterstützen eines Benutzergeräts (120), ein Modulations- und Codierungsschema, MCS, herzustellen, wobei das MCS für eine Übertragung zwischen dem Benutzergerät (120) und jeglichem einen oder mehreren von dem Netzknoten (110) oder einem zweiten Netzknoten (112) verwendet werden soll, wobei der Netzknoten (110) Folgendes umfasst:

eine Definitionsschaltung (510), konfiguriert, um einen oder mehrere Versatzwerte für das Benutzergerät (120) zu definieren, wobei die definierten einen oder mehreren Versatzwerte im Zusammenhang mit einer Modulations- und Codierungsindextabelle stehen, und

eine Sendeschaltung (520), konfiguriert, um den definierten einen oder die mehreren Versatzwerte an das Benutzergerät (120) zu senden, wobei der eine oder die mehreren Versatzwerte das Benutzergerät (120) aktivieren, um das MCS aus der Modulations- und Codierungsindextabelle herzustellen, basierend auf einer Funktion eines MCS-Indikators und dem einen oder den mehreren Versatzwerten,

wobei der eine oder die mehreren Versatzwerte mehrfache Versatzwerte umfassen, und

wobei der jeweilige Versatzwert der mehrfachen Versatzwerte mit einem oder mehreren der Folgenden assoziiert sind:

> einem Rang,
> einer Quasi-Co-Position,
> einem Downlink-Steuerinformationsformat,
> einer Downlink-Steuerinformationsressource, umfassend jeglichen aus Folgenden: einen Benutzergerätsuchraum für einen physischen Downlink-Steuerkanal, PDCCH, oder weiterentwickelten PDCCH, EPDCCH, und/oder einen physischen Ressourcenblock PRB-Satz eines erweiterten PDCCHs, EPDCCH-PRB-Satz,
> einen Übertragungsmodus,

eine RNTI.

**16.** Netzknoten (110) nach Anspruch 15, wobei der eine oder die mehreren Versatzwerte durch einen oder mehrere MCS-Untersatz-Selektoren aus der Modulations- und Codierungsindextabelle dargestellt sind.

**17.** Netzknoten (110) nach einem der Ansprüche 15-16, wobei die Übertragung angeordnet ist, um zwischen dem Benutzergerät (120) und dem Netzknoten (110) stattzufinden, wobei der Netzknoten (110) ferner Folgendes umfasst:

eine Herstellungsschaltung (530), konfiguriert, um eine Angabe herzustellen, dass in der Übertragung Daten übertragen werden sollen,
wobei die Sendeschaltung (520) ferner konfiguriert ist, um an das Benutzergerät (120) einen MCS-Indikator im Zusammenhang mit der Übertragung zu senden, wobei der MCS-Indikator basierend auf dem einen oder den mehreren Versatzwerten und einem von dem Benutzergerät (120) berichteten CQI ausgewählt ist.

**18.** Netzknoten (110) nach einem der Ansprüche 15-17, wobei:

die Definitionsschaltung (510) ferner konfiguriert ist, um einen oder mehrere aktualisierte Versatzwerte für das Benutzergerät (120) zu definieren, basierend auf einer Kanalqualität, wobei der aktualisierte Versatzwert mit der Modulations- und Codierungsindextabelle in Zusammenhang steht, und
wobei die Sendeschaltung (520) ferner konfiguriert ist, um den definierten einen oder die mehreren aktualisierten Versatzwerte an das Benutzergerät (120) zu senden, wobei der eine oder die mehreren Versatzwerte das Benutzergerät (120) aktivieren, um ein aktualisiertes MCS aus der Modulations- und Codierungsindextabelle herzustellen.

**19.** Netzknoten (110) nach einem der Ansprüche 15-18, wobei die Definitionsschaltung (510) ferner konfiguriert ist, um den einen oder die mehreren Versatzwerte für das Benutzergerät (120) basierend auf historischen Werten von zumindest einem der Folgenden zu definieren:

ein übertragenes MCS oder ein Rang,
eine empfangene Kanalstatusinformation, CSI,
eine empfangene Leistung des Referenzsignals, RSRP, oder eine empfangene Qualität des Referenzsignals, RSRQ, und

eine hybride automatische Wiederholungsanfragen HARQ-Neuübertragung.

**20.** Netzknoten (110) nach einem der Ansprüche 15-19, wobei die Herstellungsschaltung (530) ferner konfiguriert ist zum Empfangen eines CSI-Berichts von dem Benutzergerät (120), wobei der Bericht einen CQI-Indikator umfasst, und Herstellen eines CQI-Indexes in der CQI-Tabelle aus dem CQI-Indikator zusammen mit dem einen oder den mehreren Versatzwerten.

**Revendications**

**1.** Procédé dans un équipement utilisateur (120) permettant d'obtenir un schéma de modulation et de codage, MCS, lequel MCS doit être utilisé pour une transmission entre l'équipement utilisateur (120) et n'importe lequel d'un ou de plusieurs parmi le noeud de réseau (110) ou un second noeud de réseau (112), lequel équipement utilisateur (120) a connaissance d'une table d'indice de modulation et de codage, le procédé comprenant
la réception (201) d'une ou de plusieurs valeurs de décalage à partir du noeud de réseau (110),
l'obtention (205) d'un indicateur de MCS lié à ladite transmission,
l'obtention (206) du MCS à partir de la table d'indice de modulation et de codage sur la base d'une fonction de l'indicateur de MCS et de l'une ou des plusieurs valeurs de décalage,
dans lequel l'une ou les plusieurs valeurs de décalage comprennent de multiples valeurs de décalage, et
dans lequel la valeur de décalage respective parmi les multiples valeurs de décalage sont associées à un ou plusieurs parmi :

un rang,
une quasi co-location,
un format d'informations de commande descendantes,

une ressource d'informations de commande descendantes, comprenant n'importe lequel parmi : un espace de recherche d'équipement utilisateur pour un canal physique de commande descendant, PDCCH, ou un PDCCH évolué, EPDCCH, et/ou un ensemble de blocs de ressources physiques, PRB, PDCCH évolué, ensemble de PRB EPDCCH,

un mode de transmission,

une RNTI.

**2.** Procédé selon la revendication 1, dans lequel l'une ou les plusieurs valeurs de décalage sont représentées par un ou plusieurs sélecteurs de sous-ensemble de MCS à partir de la table d'indice de modulation et de codage.

**3.** Procédé selon l'une quelconque des revendications 1 et 2, comprenant en outre,

l'obtention (202) d'un indice de qualité de canal à partir d'une table d'indicateur de qualité de canal,

l'obtention (203) d'un indicateur de qualité de canal sur la base de l'indice de qualité de canal obtenu et de l'une ou des plusieurs valeurs de décalage, et

le rapport (204) de l'indicateur de qualité de canal obtenu à n'importe lequel d'un ou de plusieurs parmi : le noeud de réseau (110) ou le second noeud de réseau (112).

**4.** Procédé selon l'une quelconque des revendications 1 à 3, dans lequel l'indicateur de MSC est obtenu en étant reçu à partir du noeud de réseau impliqué dans la transmission, lequel noeud de réseau impliqué dans la transmission est n'importe lequel d'un ou de plusieurs parmi : le noeud de réseau (110) ou le second noeud de réseau (112).

**5.** Procédé dans un noeud de réseau (110) permettant d'assister un équipement utilisateur (120) pour obtenir un schéma de modulation et de codage, MCS, lequel MCS doit être utilisé pour une transmission entre l'équipement utilisateur (120) et n'importe lequel d'un ou de plusieurs parmi le noeud de réseau (110) ou un second noeud de réseau (112), le procédé comprenant :

la définition (301) d'une ou de plusieurs valeurs de décalage pour l'équipement utilisateur (120), lesquelles l'une ou les plusieurs valeurs de décalage définies sont liées à une table d'indice de modulation et de codage, et l'envoi (302) de l'une ou des plusieurs valeurs de décalage définies à l'équipement utilisateur (120), lesquelles l'une ou les plusieurs valeurs de décalage permettent à l'équipement utilisateur (120) d'obtenir le MCS à partir de la table d'indice de modulation et de codage sur la base d'une fonction d'un indicateur de MCS et de l'une ou des plusieurs valeurs de décalage,

dans lequel l'une ou les plusieurs valeurs de décalage comprennent de multiples valeurs de décalage, et

dans lequel la valeur de décalage respective parmi les multiples valeurs de décalage sont associées à un ou plusieurs parmi :

un rang,

une quasi co-location,

un format d'informations de commande descendantes,

une ressource d'informations de commande descendantes, comprenant n'importe lequel parmi : un espace de recherche d'équipement utilisateur pour un canal physique de commande descendant, PDCCH, ou un PDCCH évolué, EPDCCH, et/ou un ensemble de blocs de ressources physiques, PRB, PDCCH évolué, ensemble de PRB EPDCCH,

un mode de transmission,

une RNTI.

**6.** Procédé selon la revendication 5, dans lequel l'une ou les plusieurs valeurs de décalage sont représentées par un ou plusieurs sélecteurs de sous-ensemble de MCS à partir de la table d'indice de modulation et de codage.

**7.** Procédé selon l'une quelconque des revendications 5 et 6, dans lequel ladite transmission est entre l'équipement utilisateur (120) et le noeud de réseau (110), le procédé comprenant en outre :

l'obtention (303) d'une indication du fait que des données doivent être transmises dans ladite transmission, l'envoi (304) à l'équipement utilisateur (120), d'un indicateur de MCS lié à la transmission, lequel indicateur de MCS est sélectionné sur la base de l'une ou des plusieurs valeurs de décalage et d'un CQI rapporté par l'équipement utilisateur (120).

**8.** Procédé selon l'une quelconque des revendications 5 à 7, comprenant en outre :

la définition (305) d'une ou de plusieurs valeurs de décalage mises à jour pour l'équipement utilisateur (120) sur la base d'une qualité de canal, laquelle valeur de décalage mise à jour est liée à la table d'indice de modulation et de codage, et

l'envoi (306) de l'une ou des plusieurs valeurs de décalage mises à jour définies à l'équipement utilisateur (120), lesquelles l'une ou les plusieurs valeurs de décalage permettent à l'équipement utilisateur (120) d'obtenir un MCS mis à jour à partir de la table d'indice de modulation et de codage.

9. Procédé selon l'une quelconque des revendications 5 à 8, dans lequel la définition (301) de l'une ou des plusieurs valeurs de décalage pour l'équipement utilisateur (120) est réalisée sur la base de valeurs historiques à partir d'au moins l'un parmi :

un MCS ou un rang transmis,
des informations d'état de canal, CSI, reçues,
une puissance reçue de signal de référence, RSRP, ou une qualité reçue de signal de référence, RSRQ, et
une retransmission de requête automatique de répétition hybride, HARQ.

10. Procédé selon l'une quelconque des revendications 5 à 9, comprenant en outre :

la réception d'un rapport de CSI à partir de l'équipement utilisateur (120) lequel rapport comprend un indicateur de CQI, l'obtention d'un indice CQI dans la table de CQI à partir dudit indicateur de CQI conjointement avec l'une ou les plusieurs valeurs de décalage.

11. Équipement utilisateur (120) permettant d'obtenir un schéma de modulation et de codage, MCS, lequel MCS doit être utilisé pour une transmission entre l'équipement utilisateur (120) et n'importe lequel d'un ou de plusieurs parmi le noeud de réseau (110) ou un second noeud de réseau (112), lequel équipement utilisateur (120) a connaissance d'une table d'indice de modulation et de codage, l'équipement utilisateur (120) comprenant
un circuit de réception (410) configuré pour recevoir une ou plusieurs valeurs de décalage à partir du noeud de réseau (110), un circuit d'obtention (420) configuré pour obtenir un indicateur de MCS lié à ladite transmission, lequel circuit d'obtention (420) est en outre configuré pour obtenir le MCS à partir de la table d'indice de modulation et de codage sur la base d'une fonction de l'indicateur de MCS et de l'une ou des plusieurs valeurs de décalage, dans lequel l'une ou les plusieurs valeurs de décalage comprennent de multiples valeurs de décalage, et dans lequel la valeur de décalage respective parmi les multiples valeurs de décalage sont associées à un ou plusieurs parmi :

un rang,
une quasi co-location,
un format d'informations de commande descendantes,
une ressource d'informations de commande descendantes, comprenant n'importe lequel parmi : un espace de recherche d'équipement utilisateur pour un canal physique de commande descendant, PDCCH, ou un PDCCH évolué, EPDCCH, et/ou un ensemble de blocs de ressources physiques, PRB, PDCCH évolué, ensemble de PRB EPDCCH,
un mode de transmission,
une RNTI.

12. Équipement utilisateur (120) selon la revendication 11, dans lequel l'une ou les plusieurs valeurs de décalage sont représentées par un ou plusieurs sélecteurs de sous-ensemble de MCS à partir de la table d'indice de modulation et de codage.

13. Équipement utilisateur (120) selon l'une quelconque des revendications 11 et 12, dans lequel
le circuit d'obtention (420) est en outre configuré pour obtenir un indice de qualité de canal à partir d'une table d'indicateur de qualité de canal, et obtenir un indicateur de qualité de canal sur la base de l'indice de qualité de canal obtenu et de l'une ou des plusieurs valeurs de décalage, et dans lequel l'équipement utilisateur comprend en outre un circuit d'envoi (430) configuré pour rapporter l'indicateur de qualité de canal obtenu à n'importe lequel d'un ou de plusieurs parmi : le noeud de réseau (110) ou le second noeud de réseau (112).

14. Équipement utilisateur (120) selon l'une quelconque des revendications 11 à 13, dans lequel le circuit d'obtention (420) est en outre configuré pour obtenir l'indicateur de MSC en le recevant à partir du noeud de réseau impliqué dans la transmission, lequel noeud de réseau impliqué dans la transmission est n'importe lequel d'un ou de plusieurs parmi :

le noeud de réseau (110) ou le second noeud de réseau (112).

**15.** Noeud de réseau (110) permettant d'assister un équipement utilisateur (120) pour obtenir un schéma de modulation et de codage, MCS, lequel MCS doit être utilisé pour une transmission entre l'équipement utilisateur (120) et n'importe lequel d'un ou de plusieurs parmi le noeud de réseau (110) ou un second noeud de réseau (112), le noeud de réseau (110) comprenant :

un circuit de définition (510) configuré pour définir une ou plusieurs valeurs de décalage pour l'équipement utilisateur (120), lesquelles l'une ou les plusieurs valeurs de décalage définies sont liées à une table d'indice de modulation et de codage, et
un circuit d'envoi (520) configuré pour envoyer l'une ou les plusieurs valeurs de décalage définies à l'équipement utilisateur (120), lesquelles l'une ou les plusieurs valeurs de décalage permettent à l'équipement utilisateur (120) d'obtenir le MCS à partir de la table d'indice de modulation et de codage sur la base d'une fonction d'un indicateur de MCS et de l'une ou des plusieurs valeurs de décalage,
dans lequel l'une ou les plusieurs valeurs de décalage comprennent de multiples valeurs de décalage, et
dans lequel la valeur de décalage respective parmi les multiples valeurs de décalage sont associées à un ou plusieurs parmi :

un rang,
une quasi co-location,
un format d'informations de commande descendantes,
une ressource d'informations de commande descendantes, comprenant n'importe lequel parmi : un espace de recherche d'équipement utilisateur pour un canal physique de commande descendant, PDCCH, ou un PDCCH évolué, EPDCCH, et/ou un ensemble de blocs de ressources physiques, PRB, PDCCH évolué, ensemble de PRB EPDCCH,
un mode de transmission,
une RNTI.

**16.** Noeud de réseau (110) selon la revendication 15, dans lequel l'une ou les plusieurs valeurs de décalage sont représentées par un ou plusieurs sélecteurs de sous-ensemble de MCS à partir de la table d'indice de modulation et de codage.

**17.** Noeud de réseau (110) selon l'une quelconque des revendications 15 et 16, dans lequel ladite transmission est agencée pour être entre l'équipement utilisateur (120) et le noeud de réseau (110), le noeud de réseau (110) comprenant en outre :

un circuit d'obtention (530) configuré pour obtenir une indication du fait que des données doivent être transmises dans ladite transmission, et
dans lequel le circuit d'envoi (520) est en outre configuré pour envoyer à l'équipement utilisateur (120) un indicateur de MCS lié à la transmission, lequel indicateur de MCS est sélectionné sur la base de l'une ou des plusieurs valeurs de décalage et d'un CQI rapporté par l'équipement utilisateur (120) .

**18.** Noeud de réseau (110) selon l'une quelconque des revendications 15 à 17, dans lequel :

le circuit de définition (510) est en outre configuré pour définir une ou plusieurs valeurs de décalage mises à jour pour l'équipement utilisateur (120) sur la base d'une qualité de canal, laquelle valeur de décalage mise à jour est liée à la table d'indice de modulation et de codage, et dans lequel
le circuit d'envoi (520) est en outre configuré pour envoyer l'une ou les plusieurs valeurs de décalage mises à jour définies à l'équipement utilisateur (120), lesquelles l'une ou
les plusieurs valeurs de décalage permettent à l'équipement utilisateur (120) d'obtenir un MCS mis à jour à partir de la table d'indice de modulation et de codage.

**19.** Noeud de réseau (110) selon l'une quelconque des revendications 15 à 18, dans lequel le circuit de définition (510) est en outre configuré pour définir l'une ou les plusieurs valeurs de décalage pour l'équipement utilisateur (120) sur la base de valeurs historiques à partir d'au moins l'un parmi :

un MCS ou un rang transmis,

des informations d'état de canal, CSI, reçues,

une puissance reçue de signal de référence, RSRP, ou une qualité reçue de signal de référence, RSRQ, et

une retransmission de requête automatique de répétition hybride, HARQ.

20. Noeud de réseau (110) selon l'une quelconque des revendications 15 à 19, dans lequel le circuit d'obtention (530) est en outre configuré pour

recevoir un rapport de CSI à partir de l'équipement utilisateur (120) lequel rapport comprend un indicateur de CQI, et

obtenir un indice CQI dans la table de CQI à partir dudit indicateur de CQI conjointement avec l'une ou les plusieurs valeurs de décalage.

Fig. 1

| 201. Receive one or more offset values from network node |
| --- |

↓

| 202. Obtain channel quality index from modulation and coding index table. |
| --- |

↓

| 203. Obtain a channel quality indicator based on the obtained channel quality index and the one or more offset values. |
| --- |

↓

| 204. Reporting obtained channel quality indicator to network node or 2nd network node network node. |
| --- |

↓

| 205. Obtain MCS indicator related to said transmission. |
| --- |

↓

| 206. Obtain MCS from the modulation and coding index table based on the MCS indicator and the one or more offset values. |
| --- |

Fig. 2

301. Define one or more offset values for the UE.

302. Send defined one or more offset values to the UE.

303. Obtain an indication that data is to be transmitted in said transmission.

304 Send to UE, an MCS indicator related to the transmission.

305. Define one or more updated offset values for the UE.

306. Send defined one or more updated offset values to the UE

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012099273 A1

- WO 2013127303 A1